# EUROPEAN PATENT APPLICATION

(11) **EP 4 749 984 A1**
(43) Date of publication of application: **27.05.2026**
(21) Application number: 25212958.0
(22) Date of filing: 03.11.2025
(51) Int. Cl.: H04L 9/06, H04L 9/32, H04L 9/00

(54) **MERKLE TREE INTEGRITY PROTECTION FOR STATEFUL HASH-BASED CRYPTOGRAPHY**

(30) Priority: 25.11.2024 US 202418958229
(71) Applicant: NXP B.V., 5656 AG Eindhoven (NL)
(72) Inventor: van Vredendaal, Christine, 5656 AG Eindhoven (NL); Rombouts, Peter Maria Franciscus, 5656 AG Eindhoven (NL)
(74) Representative: Colaiuda, Antonella

(57) **Abstract**

A method for verifying integrity of a binary tree graph structure having an "h" number of layers and a plurality of nodes configured to provide a public key, including: verifying an integrity of a stored root hash value associated with a root node; obtaining a non-root node of the plurality of nodes, the "h" number of layers includes a leaf layer, and the leaf layer includes a plurality of leaf nodes associated with a plurality of one-time signing public keys; obtaining an authentication path associated with the non-root node, the authentication path including other nodes; performing a plurality of pairwise hash computations on the non-root node and other nodes to produce a candidate root hash value; comparing the candidate root hash value to the stored root hash value; and determining the integrity of the binary tree graph is verified when the candidate root value equals the stored root value.

## Description

### BACKGROUND OF THE INVENTION

### FIELD OF THE INVENTION

The present disclosure is directed in general to a system and method for binary tree graph integrity protection and, specifically, to a system and method utilizing an efficient hash tree integrity method that may be used by devices with constrained memory resources or other embedded computing systems utilizing stateful hash-based cryptography.

### DESCRIPTION OF RELATED ART

Digital signatures are of vital importance to the cryptographic infrastructure. For example, they underpin the authentication infrastructure in the form of digital certificates on the internet, which is shifting more and more to resource-constrained devices in the Internet of Things (IoT). In order to make digital signatures accessible to such small devices, it is important to minimize the resource requirements and optimize the efficiency of the involved algorithms (e.g., key generation, signing and verification).

### BRIEF DESCRIPTION OF THE DRAWINGS

One or more embodiments are described by way of example with reference to the accompanying drawings, in which:
FIG. 1 illustrates an example of a binary-tree-graph structure having a plurality of nodes configure to provide a public key in accordance with embodiments of the present disclosure;
FIG. 2 illustrates an example of a binary-tree-graph structure in which certain nodes have been highlighted to illustrate the authentication path corresponding to a non-root node in accordance with embodiments of the present disclosure;
FIG. 3 illustrates an example of a binary-tree-graph structure in which certain nodes have been highlighted to illustrate an example of verifying the integrity of the binary-tree-graph in accordance with embodiments of the present disclosure;
FIG. 4 illustrates an example of a binary-tree-graph structure in which certain nodes have been highlighted to illustrate another example of verifying the integrity of the binary-tree-graph in accordance with embodiments of the present disclosure;
FIG. 5 illustrates an example of a binary-tree-graph structure in which certain nodes have been highlighted to illustrate another example of verifying the integrity of the binary-tree-graph in accordance with embodiments of the present disclosure;
FIG. 6 illustrates an example of a binary-tree-graph structure in which certain nodes have been highlighted to illustrate another example of verifying the integrity of the binary-tree-graph in accordance with embodiments of the present disclosure;
FIG. 7 is a flow chart illustrating an example of a method for verifying integrity of a binary-tree-graph in accordance with embodiments of the present disclosure; and
FIG. 8 is a block diagram depicting an example of a computing device of a data processing system that has functional components including a co-processor for verifying integrity of a binary-tree-graph in accordance with embodiments of the present disclosure.

### DETAILED DESCRIPTION

The following detailed description is illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Digital signatures support cryptographic and authentication infrastructure in the form of digital certificates on the internet, which is shifting more and more to resource-constrained devices as part of the Internet of Things (IoT). In order to make verification of digital signatures feasible to such resource-constrained devices, it can be important to minimize the resource requirements and optimize the efficiency of the involved cryptographic signature processing algorithms (e.g., key generation, signing, and verification).

Embodiments herein will be described that speed-up integrity verification of a binary tree graph (BTG). While previous methods would apply a CRC or a MAC to the entire binary tree graph, would verify integrity of the BTG by re-computing the root from all leaf nodes (e.g., h=0 nodes), or would verify a generated signature that could require over 1000 hash operations, the embodiments described herein speed up integrity verification, use less hash operations, and load less data in order to verify the integrity of the BTG. The disclosed embodiments achieve this by integrity protecting only the root of the binary tree graph, and then bootstrapping this protection to a remainer of the BTG by performing a "fake" verification. The fake verification includes loading a non-root node associated with an OTS public key, and performing pairwise hash computations on the non-root node and an authentication path associated with the non-root node to produce a candidate root hash value. This method uses "h" (the number of levels in the BTG) number or less hash operations, which decreases verification time while maintaining security of the BTG as the root node is integrity protected. Thus, when the candidate root hash value equals the integrity protected root hash value, a device (e.g., signing) verifies the integrity of the BTG.

The most commonly used signature schemes are variants of (Elliptic Curve) Digital Signature Algorithm ((EC)DSA) and Rivest-Shamir-Adleman (RSA). However, with the advancements of quantum computing, the security of RSA and (EC)DSA is likely to be threatened. The idea of hash-based signatures dates back to a proposal by Ralph Merkle from the late 1970s. The security of this approach relies on the cryptographic strength of the used hash function and the pseudo-random function family: cryptographic primitives which are well-studied, understood, and not known to be broken by quantum computers.

Hash-based signature (HBS) cryptosystems (such as the eXtended Merkle Signature Scheme (XMSS)) can increase the complexity of a cryptosystem to ensure reliable security, even if cryptographic attacks are generated by quantum computing systems. The security of these HBS cryptosystems rely on the cryptographic strength of hash functions and the pseudo-random cryptographic function families used in implementing such systems.

In an example, XMSS uses Winternitz One-Time Signature+ (WOTS+) as underlying One-Time Signature (OTS). Another example of a hash-based scheme is Leighton-Micali Signatures (LMS). At the core of both these schemes lies a binary-tree-graph structure in which leaf nodes (the lowermost layer) correspond to public keys of OTS schemes. These public keys are in turn constructed from the OTS secret key using hash functions.

Hash functions implement mathematical operations that receive an input of arbitrary length and generate, based on that input, an output that is a pseudorandom ciphertext of a fixed length. Hash functions are characterized in that it is very difficult to calculate the input to a hash function based upon an output value. The tree includes "nodes" that each consist of n-bit hash values.

In typical embodiments of HBS cryptosystems, these binary-tree graph structures are referred to as Merkle trees. Cryptographic signatures are created and validated by computing a number of hashes of values associated with different nodes of a Merkle tree. The lowest layer (the leaves of the tree) consists of the hashed OTS public keys of the OTS keypairs. The public key of the Merkle-tree scheme is then the root node of the Merkle tree, which is constructed by taking pair-wise hashes of Merkle tree nodes, starting from the leaves, until one node remains.

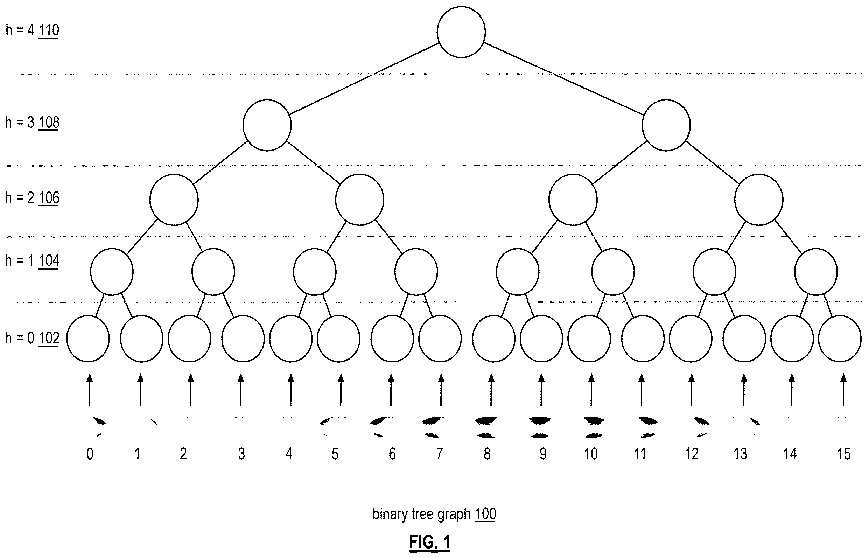

FIG. 1 illustrates an example of a binary-tree-graph (BTG) structure 100 (e.g., a Merkle tree) that includes sixteen leaf nodes at the tree's lowest layer 102. Each leaf node corresponds to a public key of a One-Time Signature (OTS) scheme. The public keys are constructed from one or more OTS secret keys using hash functions. In this example, the BTG structure 100 includes five levels or layers in total that include the lowest level 102, level 104, level 106, level 108 and level 110, which is the root level of the BTG structure. The levels of the BTG structure (e.g., Merkle tree) 100 are referred to by the variable "h" (height) so that the levels in BTG structure 100, from the lowest level up to the root level, are h=0, 1, 2, 3, 4. In other examples, h is 10, 15, 20 or more.

Each node (represented by a circle) in the BTG 100 consists of an n-byte hash value. In typical applications, n=24 or n=32, however, n can be larger or smaller in other embodiments. The Winternitz parameter w is a value that controls the application of the hash function to generate the Merkle leaf node and is chosen from the set {4, 16}. The parameter can be used to achieve a trade-off between signature size and signing speed. The number is typically chosen from the set {2, 4, 16, 256}.

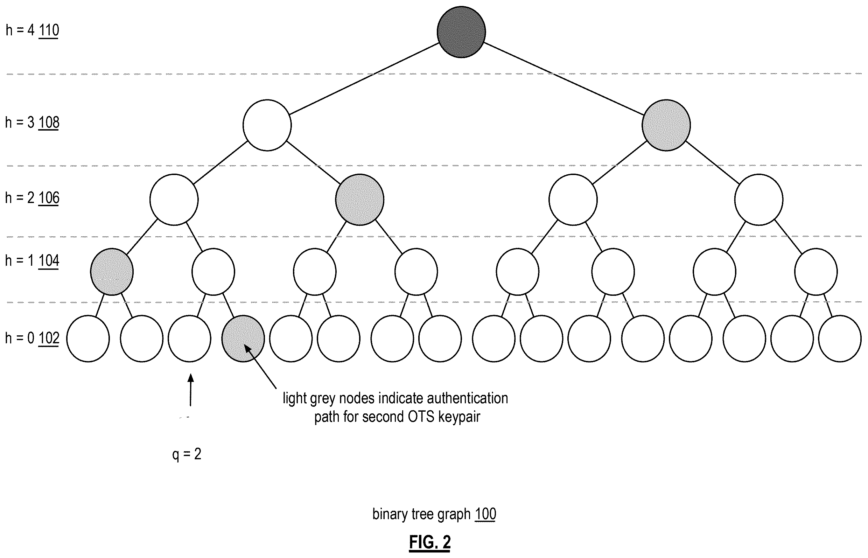

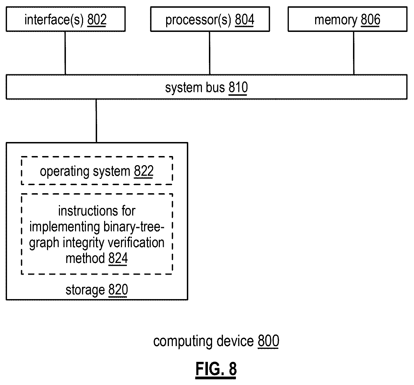

A Merkle-tree-based many-signature scheme signature typically consists of 3 elements: [q, σ, A], where q is the index of the Merkle tree leaf node whose corresponding OTS private key was used to construct a signature σ, and A is the authentication path (i.e., a list of the values of the nodes making up the authentication path) corresponding to that leaf node (e.g., as illustrated in Figure 2). When implementing a cryptosystem, the 3 elements of the Merkle-tree-based many-signature scheme signature may be encoded into a message that may be transmitted to a remote device (e.g., via an interface 802 of Figure 8).

In this example, the leaf nodes on level 102 consist of the hashed public keys of the various OTS key pairs. The nodes on level 104 consist of pair-wise hashes of the corresponding connected nodes in the lowest level 102. The nodes on level 106 consist of pair-wise hashes of the corresponding connected nodes in level 104. The nodes on level 108 consist of pair-wise hashes of the corresponding connected nodes in level 106. And, the root node on level 110 consists of the pair-wise hash of the corresponding connected nodes in level 108. Thus, the public key of the BTG structure 100 is the hash value of root node on level 110.

FIG. 2 illustrates an example of a binary-tree-graph 100 structure in which certain nodes have been highlighted to illustrate the authentication path corresponding to a second OTS key (e.g., index q = 2). For example, when signing a message, a signer signs with a (previously unused) OTS keypair (e.g., the second OTS private key), and sends the OTS signature of the message, along with the corresponding authentication path to a verifier. This authentication path has a purpose that a verifier can verify an OTS signature against the public key of the BTG structure 100 instead of against the OTS public key, which can reduce bandwidth, reduce storage space, and decrease compute time.

Given the signature, the verifier may then compute the candidate root key as follows. First, the verifier computes the OTS public key from the OTS signature, and applies a hash to construct the corresponding Merkle tree leaf. Then, the verifier can apply, in a certain order, a pairwise hash with the elements of the provided authentication path to produce a candidate root key. If the candidate root key matches the public key (root of Merkle tree), the signature is verified.

For the signer, computing the authentication path is a computation-intensive task. If the signer starts from just the signer's OTS secret keys (often stored in the form of a SEED), then the signer has to recompute most Merkle tree leaf nodes (the most expensive part) to be able to compute the authentication path. Alternatively, the signer could store the entire Merkle tree in memory, but for parameter sets of interest (h=10, 15 or even 20) this means storing more than 50 kB, or even MBs of data, which is infeasible on constrained devices (e.g., for storage in secure memory).

However, since the Merkle tree is in essence a combination of public keys, it is not required to be stored in secure memory. For example, the Merkle tree can be stored in Flash memory and parts of the Merkle tree can be loaded when needed. For smaller parameter sets, this might be feasible. However, the integrity of the Merkle tree needs to be protected, as if parts of the Merkle tree are tampered with, invalid signatures could be released.

To solve these issues, some solutions include a first approach where a CRC or MAC is applied to the entire BTG structure 100. This verification would take re-computation of the CRC or MAC over the entire tree structure (e.g., up to 2^{h} hashes). In the case that this computation is done in a secure enclave, the entire Merkle tree would need to be loaded as well, which may be around 50kB in size. This first approach would require significant compute time.

A second approach could be to verify the integrity of the BTG by re-computing the root of the tree from the leaf nodes (e.g., h=0 nodes). This halves the data that needs to be loaded to the hash accelerator compared to the first approach, but this is still too slow for many applications.

A third approach could be to, after the signature is computed, perform a verification of the generated signature. If the computed root matches the public key, then the BTG was not tampered with. This approach only requires loading the authentication path, but still requires over a thousand hash operations for the signature verification based on the OTS scheme. This approach will approximately double the signing time.

The embodiments disclosed herein enable faster verification of the integrity of the BTG as only "h" or a smaller number of hash operations need to be computed to produce a candidate root value. The embodiments disclosed herein also allow for less data to be loaded from external memory.

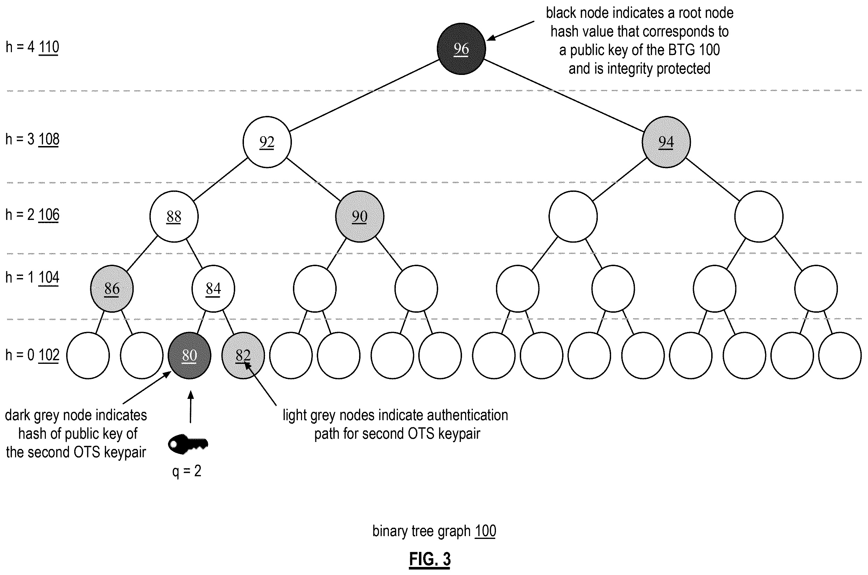

FIG. 3 illustrates an example of a binary-tree-graph (BTG) structure 100 in which only a stored root hash value (ROOT) corresponding to the root node of the BTG 100 is integrity protected and then a fake verification on the needed authentication path is performed to compute a candidate root value. In an example, a cyclic redundancy check (CRC) is applied to the stored root hash value. As another example, a message authentication code (MAC) is applied to the stored root hash value. As yet a further example, a hash is applied to the stored root hash value.

In an example of verifying integrity of the binary tree graph 100 utilizing a fake verification, a signer loads a non-root node (dark grey) corresponding to the public key of a second OTS keypair of the binary tree graph 100. For example, the signer looks up a hash value associated with the dark grey node 80. The signer then performs pairwise hash computations on the dark grey node 80 and an authentication path indicated by the light grey nodes 82, 86, 90 and 94, which results in hash values computed for nodes 84, 88, 92, and finally a candidate root value "R" is generated for root node 96.

The signer compares the candidate root value "R" to the integrity protected root node value "ROOT". When "R" matches the integrity protected root node value "ROOT", the integrity of the binary tree graph is verified. When "R' does not match the integrity protected root node value, the signer determines the integrity of the BTG 100 has been compromised.

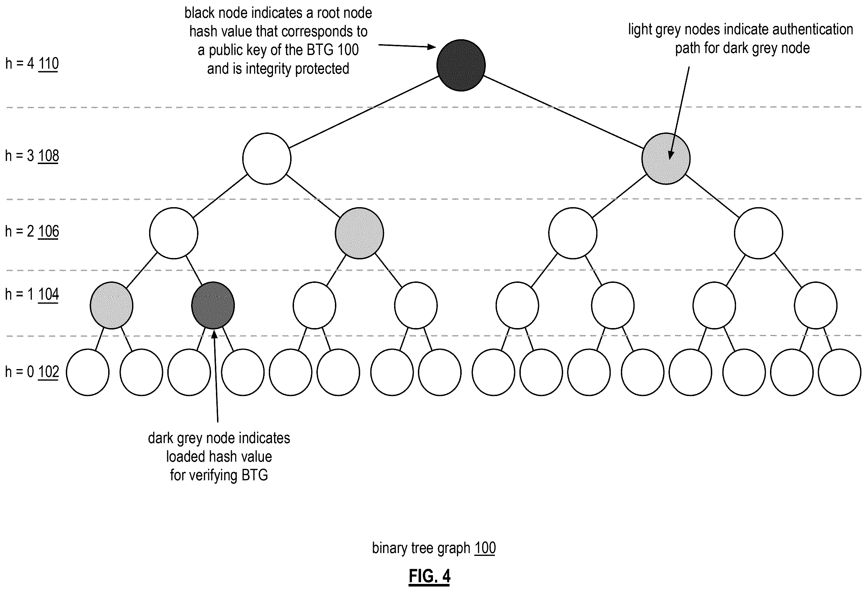

In some embodiments, this method can be used to verify the integrity of the BTG 100 outside of a signing operation by sampling one or more random non-root nodes (e.g., any i < 2^{h}) and applying the fake verification steps. In some embodiments, the fake verification method may be implemented using a non-leaf (h=0), non-root (e.g., h = 1-3, h ≠ h) node as will be discussed with reference to Figures 4-6.

FIG. 4 illustrates an example of a binary-tree-graph structure 100 in which certain nodes have been highlighted to illustrate another example of verifying the integrity of the BTG 100 by utilizing a higher level node (e.g., on level 104 or h=1) and an authentication path corresponding to the higher level node. In this example, the dark grey node is loaded along with the light grey nodes and pairwise hash computations are performed h - 1 times to produce the candidate root node value "R". By utilizing a higher level node for the fake verification, the compute time and the amount of data that needs to be loaded to verify integrity of the BTG 100 is decreased.

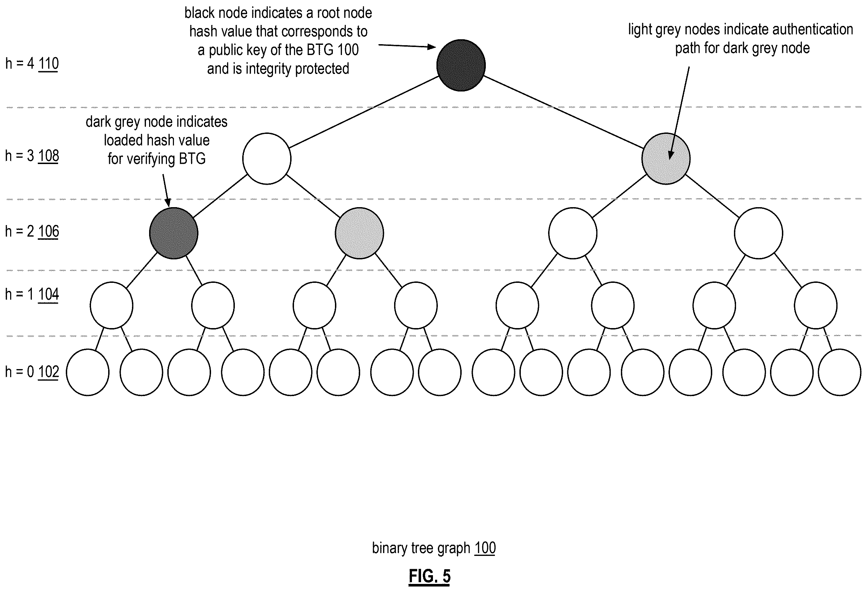

FIG. 5 illustrates an example of a binary-tree-graph structure in which certain nodes have been highlighted to illustrate another example of verifying the integrity of the BTG 100 by utilizing a higher level node (e.g., on level h=2 106) and an authentication path corresponding to the higher level node on level 106. In this example, the dark grey node is loaded along with the light grey nodes and pairwise hash computations are performed h - 2 times to produce the candidate root node value "R". By utilizing a higher level node for the fake verification, the compute time and the amount of data that needs to be loaded to verify integrity of the BTG 100 is further decreased.

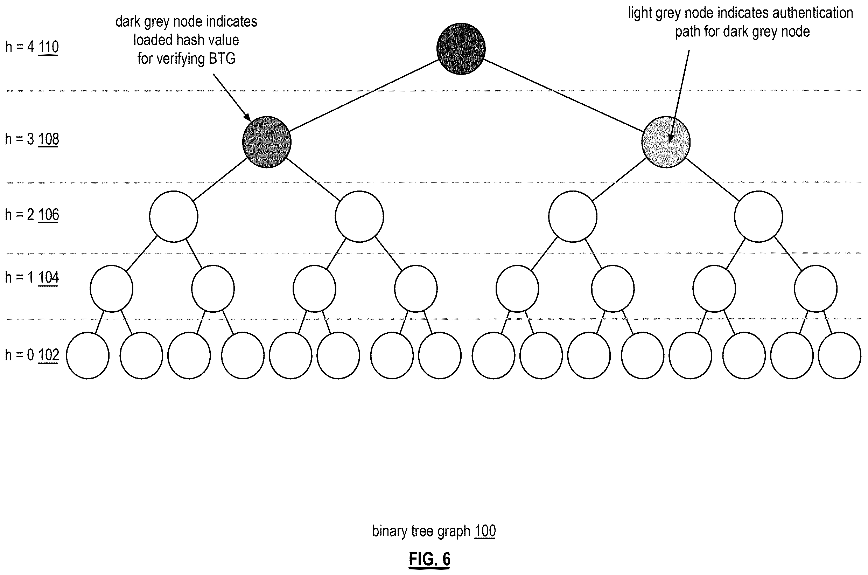

FIG. 6 illustrates an example of a binary-tree-graph structure in which certain nodes have been highlighted to illustrate another example of verifying the integrity of the BTG 100 by utilizing a higher level node (e.g., on level h=3 108) and an authentication path corresponding to the higher level node. In this example, the dark grey node is loaded along with the light grey nodes and pairwise hash computations are performed h - 3 times to produce the candidate root node value "R". By utilizing a higher level node (e.g., h=3) for the fake verification, the compute time and the amount of data that needs to be loaded to verify integrity of the BTG 100 is further decreased.

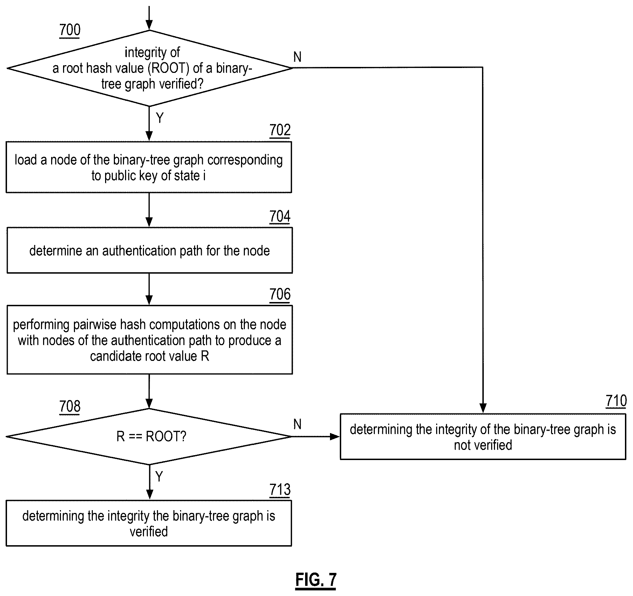

FIG. 7 is a flow chart illustrating a method for verifying integrity of a binary-tree-graph. The method includes step 700, with determining whether integrity of a root hash value (ROOT) of a binary tree graph (BTG) is verified. In an example, a stored root hash value is loaded along with a MAC of the stored root hash value. A candidate MAC value is computed from the loaded root hash value, and when the candidate MAC value matches the MAC, the integrity of root hash value is verified.

When the integrity of the ROOT is not verified, the method continues to step 710, with determining that the integrity of the binary-tree graph is not verified (e.g., is compromised). When the integrity of the ROOT is verified, the method also includes step 702, with loading a non-root node of the BTG (e.g., that corresponds to a public key of state i). For example, a leaf node that represents the hash value of a public key of index q=2 is loaded.

The method further includes step 704, with determining an authentication path for the non-root node. For example, the hash values associated with the authentication path of Figure 3 are determined and loaded. In an example, these values are stored on Flash memory and are loaded onto secure memory for the verification process. The method further includes step 706, with performing pairwise hash computations on the non-root node with the hash values associated with the determined authentication path to produce a candidate root value "R".

For example, a number (e.g., h or less) of pairwise hash computations are performed on the nodes of Figure 3, beginning with hash values of the nodes 80 and 82 to produce a hash value for node 84 (e.g., with the second node to the right of level h =1). The hash value nodes 84 and 86 are hashed to produce a hash value for node 88 (e.g., the left of level h = 2), and so on until the pairwise hash of the nodes 92 and 94 on level h =3 are computed to produce a hash value (ROOT) 96 (e.g., the black node on level h = 4).

The method further includes step 708, with determining whether R is the same value as ROOT. When R does not equal ROOT, the method continues to step 710, with determining the binary tree graph is not verified. When R does equal ROOT, the method continues to step 713, with determining the binary tree graph is verified.

In an embodiment, the method also includes generating a root hash value for the binary tree graph and generating an integrity check value based on the root hash value. In an example, the root hash value and the integrity check value are stored in external memory. In another example, one or more of a secret key associated with the BTG, the root hash value, and the integrity check value are stored in a secure memory. In an embodiment the method further includes signing a message utilizing the secret key (e.g., a private key) associated with a public key of the binary tree graph to produce a signature. In some examples, the method includes sending the signature, the non-root node, and the other nodes of the corresponding authentication path to a verifier.

Figure 8 illustrates an exemplary computing device 800 for implementing the verifying the integrity of a binary tree graph methods as described herein, for example as a data processing system. As illustrated, computing device 800 includes one or more processor(s) 804, memory 806, user interface(s) 802, and storage 820 interconnected via one or more system buses 810. It will be understood that FIG. 8 constitutes, in some respects, an abstraction and that the actual organization of the components of the computing device 800 may be more complex than illustrated.

A processor 804 of the one or more processors may be any hardware device capable of executing instructions stored in memory 806, and/or storage 820 or otherwise processing data. As such, the processor may include a microprocessor, microcontroller, graphics processing unit (GPU), field programmable gate array (FPGA), application-specific integrated circuit (ASIC), or other similar devices. The processor may be implemented as a secure processor or may include both a secure processor and unsecure processor.

The memory 806 may include various memories such as, for example L1, L2, or L3 cache or system memory. As such, the memory 806 includes static random-access memory (SRAM), dynamic RAM (DRAM), flash memory, read only memory (ROM), or other similar memory devices. In some embodiments, the memory includes secure memory.

An interface of the interfaces 802 may include one or more devices for enabling communication with a user as needed. For example, the interface 802 may include a display, a touch interface, a mouse, and/or a keyboard for receiving user commands. In some embodiments, the interface 802 may include a command line interface or graphical user interface that may be presented to a remote terminal via the network interface 850.

As another example, an interface 802 of the interfaces 802 may include one or more devices for enabling communication with other hardware devices. For example, the interface 802 may include a network interface card (NIC) configured to communicate according to the Ethernet protocol or other communications protocols, including wireless protocols. Additionally, the interface 802 may implement a TCP/IP stack for communication according to the TCP/IP protocols. Various alternative or additional hardware or configurations for interface 802 will be apparent.

The storage 820 may include one or more machine-readable storage media such as read-only memory (ROM), random-access memory (RAM), magnetic disk storage media, optical storage media, flash-memory devices, or similar storage media. In various embodiments, the storage 820 may store instructions for execution by the one or more processors 804 or data upon with the processors 804 may operate. For example, the storage 820 may store an operating system 822 for controlling various basic operations of the computing device 800. The storage 820 may include programming instructions for implementing the signing methods described herein. In an example, storage 820 is also referred to as a computer readable storage medium.

It will be apparent that various information described as stored in the storage 820 may be additionally or alternatively stored in the memory 806. In this respect, the memory 806 may also be considered to constitute a "storage device" and the storage 820 may be considered a "memory." Various other arrangements will be apparent. Further, the storage 820 and memory 806 may both be considered to be "non-transitory computer or machine readable media." As used herein, the term "non-transitory" will be understood to exclude transitory signals but to include all forms of storage, including both volatile and non-volatile memories.

While the computing device 800 is shown as including at least one of each described component, the various components may be duplicated in various embodiments. For example, the processor(s) 804 may include multiple microprocessors that are configured to independently execute the methods described herein or are configured to perform steps or subroutines of the methods described herein such that the multiple processors cooperate to achieve the functionality described herein. Further, where the computing device 800 is implemented in a cloud computing system, the various hardware components may belong to separate physical systems. For example, the processor 804 may include a first processor in a first server and a second processor in a second server.

In an illustrative, non-limiting embodiment, a method for verifying integrity of a binary tree graph structure having an "h" number of layers and a plurality of nodes configured to provide a public key is provided. The method includes verifying an integrity of a stored root hash value associated with a root node of the plurality of nodes. When the integrity of the stored root hash value is verified, the method further includes obtaining a non-root node of the plurality of nodes, the "h" number of layers includes a leaf layer, the leaf layer includes a plurality of leaf nodes associated with a plurality of one-time signing (OTS) public keys. The method further includes obtaining an authentication path associated with the non-root node, the authentication path includes other nodes of the plurality of nodes. The method further includes performing a plurality of pairwise hash computations on the non-root node and other nodes to produce a candidate root hash value. The method further includes comparing the candidate root hash value to the stored root hash value and determining the integrity of the binary tree graph structure is verified when the candidate root hash value equals the stored root hash value.

This embodiment includes optional aspects. With one optional aspect, the method includes obtaining the stored root hash value, obtaining an integrity check value associated with the stored root hash value, computing a second integrity check value based on the stored root hash value, and comparing the second integrity check value to the integrity check value. When the second integrity check value matches the integrity check value, the integrity of the stored root hash value is verified. When the second integrity check value does not match the integrity check value, the integrity of the stored root hash value is not verified.

In another optional aspect, the integrity check value is a cyclic redundancy check. In another optional aspect, the integrity check value is a hash value. In another optional aspect, the integrity check value is a message authentication code. In yet another optional aspect, the number of the plurality of pairwise hash computations performed to produce the candidate root value is less than or equal to the "h" number of layers.

In another optional aspect, the method further includes generating a root hash value for the binary tree graph structure, applying an integrity check to the root hash value to produce an integrity check value, and storing the root hash value and/or the integrity check value on an external memory.

In another optional aspect, the method includes signing a message utilizing a secret key associated with an OTS public key of the plurality of OTS public keys of the binary tree graph to produce a signature. The secret key is associated with the non-root node (e.g., is the leaf node hash of the OTS public key, is a node directly above the leaf node associated with the OTS public key, etc.). In this optional aspect, the method can further include sending the signature, the non-root node and the other nodes to a verifier for verification of the signature. In another optional aspect, when the integrity of the stored root hash value is not verified, the method includes determining the integrity of the binary tree graph structure is compromised.

As used herein, the term "non-transitory computer or machine readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the embodiments disclosed herein is, for the most part, composed of electronic components and circuits known to those skilled in the art, circuit details will not be explained in any greater extent than that considered necessary as illustrated above, for the understanding and appreciation of the underlying concepts of the invention and in order not to obfuscate or distract from the teachings of the invention.

Although the invention is described herein with reference to specific embodiments, various modifications and changes can be made without departing from the scope of the invention as set forth in the claims below. Accordingly, the specification and figures are to be regarded in an illustrative rather than a restrictive sense, and all such modifications are intended to be included within the scope of the invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine. It should be appreciated by those skilled in the art that any block diagrams herein represent conceptual views of illustrative circuitry embodying the principles of the invention.

As may be used herein, the term(s) "configured to", "operably coupled to", "coupled to", and/or "coupling" includes direct coupling between items and/or indirect coupling between items via an intervening item (e.g., an item includes, but is not limited to, a component, an element, a circuit, and/or a module) where, for an example of indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to".

As may further be used herein, the term(s) "configured to", "operable to", "coupled to", or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may be used herein, one or more claims may include, in a specific form of this generic form, the phrase "at least one of a, b, and c" or of this generic form "at least one of a, b, or c", with more or less elements than "a", "b", and "c". In either phrasing, the phrases are to be interpreted identically. In particular, "at least one of a, b, and c" is equivalent to "at least one of a, b, or c" and shall mean a, b, and/or c. As an example, it means: "a" only, "b" only, "c" only, "a" and "b", "a" and "c", "b" and "c", and/or "a", "b", and "c".

As may also be used herein, the terms "processor", "processing circuitry", "processing circuit", "processing module", and/or "processing unit" may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. Further, such a processing device may include a plurality of processing cores or processing domains, which may operate on separate power domains. The processor, processing circuitry, processing circuit, processing module, and/or processing unit may be or may further include memory and/or an integrated memory element, which may be a single memory device, a plurality of memory devices, and/or embedded circuitry of another processor, processing circuitry, processing circuit, processing module, and/or processing unit. Such a memory device may be a read-only memory, random access memory, volatile memory, non-volatile memory, static memory, dynamic memory, flash memory, cache memory, and/or any device that stores digital information. Note that if the processor, processing circuitry, processing circuit, processing module, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processor, processing circuitry, processing circuit, processing module, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processor, processing circuitry, processing circuit, processing module, and/or processing unit executes, hard coded and/or operational instructions corresponding to at least some of the steps and/or functions illustrated in one or more of the figures. Such a memory device or memory element can be included in an article of manufacture.

One or more embodiments have been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims.

To the extent used, the logic diagram block boundaries and sequence could have been defined otherwise and still perform the certain significant functionality. Such alternate definitions of both functional building blocks and logic diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors/processing cores executing appropriate software and the like or any combination thereof.

To implement various operations described herein, computer program code (i.e., program instructions for carrying out these operations) may be written in any combination of one or more programming languages, including an object-oriented programming language such as Java, Smalltalk, Python, C++, or the like, conventional procedural programming languages, such as the "C" programming language or similar programming languages, or any of machine learning software. These program instructions may also be stored in a computer readable storage medium that can direct a computer system, other programmable data processing apparatus, controller, or other device to operate in a particular manner, such that the instructions stored in the computer readable medium produce an article of manufacture including instructions which implement the operations specified in the block diagram block or blocks. The program instructions may also be loaded onto a processing core, processing circuitry, computer, other programmable data processing apparatus, controller, or other device to cause a series of operations to be performed on the computer, or other programmable apparatus or devices, to produce a computer implemented process such that the instructions upon execution provide processes for implementing the operations specified in the block diagram block or blocks.

The one or more embodiments are used herein to illustrate one or more aspects, one or more features, one or more concepts, and/or one or more examples. A physical embodiment of an apparatus, an article of manufacture, a machine, and/or of a process may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

The term "module" may be used in the description of one or more of the embodiments. A module implements one or more functions via a device such as a processor or other processing device or other hardware that may include or operate in association with a memory that stores operational instructions. A module may operate independently and/or in conjunction with software and/or firmware. As also used herein, a module may contain one or more sub-modules, each of which may be one or more modules.

As may further be used herein, a computer readable memory includes one or more memory elements. A memory element may be a separate memory device, multiple memory devices, or a set of memory locations within a memory device. Such a memory device may be a read-only memory, random access memory, volatile memory, non-volatile memory, static memory, dynamic memory, flash memory, cache memory, a quantum register or other quantum memory and/or any other device that stores data in a non-transitory manner. Furthermore, the memory device may be in a form of a solid-state memory, a hard drive memory or other disk storage, cloud memory, thumb drive, server memory, computing device memory, and/or other non-transitory medium for storing data. The storage of data includes temporary storage (i.e., data is lost when power is removed from the memory element) and/or persistent storage (i.e., data is retained when power is removed from the memory element). As used herein, a transitory medium shall mean one or more of: (a) a wired or wireless medium for the transportation of data as a signal from one computing device to another computing device for temporary storage or persistent storage; (b) a wired or wireless medium for the transportation of data as a signal within a computing device from one element of the computing device to another element of the computing device for temporary storage or persistent storage; (c) a wired or wireless medium for the transportation of data as a signal from one computing device to another computing device for processing the data by the other computing device; and (d) a wired or wireless medium for the transportation of data as a signal within a computing device from one element of the computing device to another element of the computing device for processing the data by the other element of the computing device. As may be used herein, a non-transitory computer readable memory is substantially equivalent to a computer readable memory. A non-transitory computer readable memory can also be referred to as a non-transitory computer readable storage medium.

While particular combinations of various functions and features of the one or more embodiments have been expressly described herein, other combinations of these features and functions are likewise possible. The present disclosure is not limited by the particular examples disclosed herein and expressly incorporates these other combinations.

## Claims

1. A method for verifying integrity of a binary tree graph structure having an "h" number of layers and a plurality of nodes configured to provide a public key, comprising:
verifying an integrity of a stored root hash value associated with a root node of the plurality of nodes;
when the integrity of the stored root hash value is verified, obtaining a non-root node of the plurality of nodes, wherein the "h" number of layers includes a leaf layer, wherein the leaf layer includes a plurality of leaf nodes associated with a plurality of one-time signing (OTS) public keys;
obtaining an authentication path associated with the non-root node, wherein the authentication path includes other nodes of the plurality of nodes;
performing a plurality of pairwise hash computations on the non-root node and the other nodes to produce a candidate root hash value;
comparing the candidate root hash value to the stored root hash value; and
determining the integrity of the binary tree graph structure is verified when the candidate root hash value equals the stored root hash value.

2. The method of claim 1, wherein the verifying comprises:
obtaining the stored root hash value;
obtaining an integrity check value associated with the stored root hash value;
computing a second integrity check value based on the stored root hash value;
comparing the second integrity check value to the integrity check value;
determining the integrity of the stored root hash value is verified when the second integrity check value matches the integrity check value; and
determining the integrity of the stored root hash value is not verified when the second integrity check value does not match the integrity check value.

3. The method of claim 2, wherein the integrity check value comprises a cyclic redundancy check.

4. The method of claim 2, wherein the integrity check value comprises a hash value.

5. The method of claim 2, wherein the integrity check value comprises a message authentication code.

6. The method according to any preceding claim, wherein a number of the plurality of pairwise hash computations is less than or equal to the "h" number.

7. The method according to any preceding claim further comprising:
generating a root hash value for the binary tree graph structure;
applying an integrity check to the root hash value to produce an integrity check value; and
storing the root hash value with the integrity check value on an external memory.

8. The method according to any preceding claim further comprising:
signing a message utilizing a secret key associated with an OTS public key of the plurality of OTS public keys that is associated with the non-root node to produce a signature.

9. The method of claim 8 further comprising:
sending the signature, the non-root node, and the other nodes to a verifier.

10. The method according to any preceding claim further comprising:
when the integrity of the stored root hash value is not verified, determining the integrity of the binary tree graph structure is compromised.

11. A data processing system comprising instructions embodied in a non-transitory computer readable medium, the instructions for verifying integrity of a binary tree graph structure having an "h" number of layers and a plurality of nodes configured to provide a public key, comprising:
verifying an integrity of a stored root hash value associated with a root node of the plurality of nodes;
when the integrity of the stored root hash value is verified, obtaining a non-root node of the plurality of nodes, wherein the "h" number of layers includes a leaf layer, wherein the leaf layer includes a plurality of leaf nodes associated with a plurality of one-time signing (OTS) public keys;
obtaining an authentication path associated with the non-root node, wherein the authentication path includes other nodes of the plurality of nodes;
performing a plurality of pairwise hash computations on the non-root node and the other nodes to produce a candidate root hash value;
comparing the candidate root hash value to the stored root hash value; and
determining the integrity of the binary tree graph structure is verified when the candidate root hash value equals the stored root hash value.

12. The data processing system of claim 11, wherein the verifying comprises:
obtaining the stored root hash value;
obtaining an integrity check value associated with the stored root hash value;
computing a second integrity check value based on the stored root hash value;
comparing the second integrity check value to the integrity check value;
determining the integrity of the stored root hash value is verified when the second integrity check value matches the integrity check value; and
determining the integrity of the stored root hash value is not verified when the second integrity check value does not match the integrity check value.

13. The data processing system of claim 12, wherein the integrity check value comprises a cyclic redundancy check.

14. The data processing system of claim 12, wherein the integrity check value comprises a hash value.

15. The data processing system of claim 12, wherein the integrity check value comprises a message authentication code.
